Europäisches Patentamt

European Patent Office

Office européen des brevets

(19)

(11) Publication number: **0 282 258**
**A2**

(12) # EUROPEAN PATENT APPLICATION

(21) Application number: **88301984.6**

(22) Date of filing: **08.03.88**

(51) Int. Cl.⁴: **F16C 21/00**

(30) Priority: **09.03.87 GB 8705474**

(43) Date of publication of application:
**14.09.88 Bulletin 88/37**

(84) Designated Contracting States:
**CH DE FR GB IT LI SE**

(71) Applicant: **FEDERAL-MOGUL WESTWIND AIR BEARINGS LIMITED**
**Trading Park Holton Heath**
**Poole Dorset BH16 6LN(GB)**

(72) Inventor: **Henocq, Ronald George**
**Prego Eddy Green Road**
**Lytchett Matravers Dorset(GB)**

(74) Representative: **Cooke, William Douglas et al**
**Hughes Clark & Co. 63 Lincoln's Inn Fields**
**London WC2A 3JU(GB)**

(54) Bearing assemblies for shafts.

(57) A shaft for driving a tool chuck is mounted in an axially fixed bearing unit consisting of two angular contact ball bearings and in an air lubricated journal bearing which allows the shaft to expand freely when its temperature rises.

EP 0 282 258 A2

# BEARING ASSEMBLIES FOR SHAFTS

This invention relates to bearing assemblies for shafts.

There is a basic problem inherent in the construction of high speed bearing assemblies in that the shaft supported by the assembly inevitably increases in length during the warm up period when the assembly is brought into action. When the assembly comprises two bearing units displaced from one another along the shaft and mounted so that the thermal expansion necessitates movement of one bearing unit relatively to the other, this has led to structural problems which it is the object of the present invention to overcome.

According to the invention, a bearing assembly comprises a shaft, a support for the shaft, a mechanical bearing unit interposed between the shaft and the support, the mechanical bearing unit being fixed against axial movement at least in one axial direction with respect to both the shaft and the support, and a gas lubricated journal bearing interposed between the shaft and the support, the gas lubricated journal bearing being mounted in a position displaced from the mechanical bearing unit for the shaft to expand freely through the gas lubricated journal bearing when the shaft temperature rises. When the mechanical bearing unit is fixed against axial movement in both axial directions with respect to the shaft and support it may advantageously consist of two angular contact rolling element bearings.

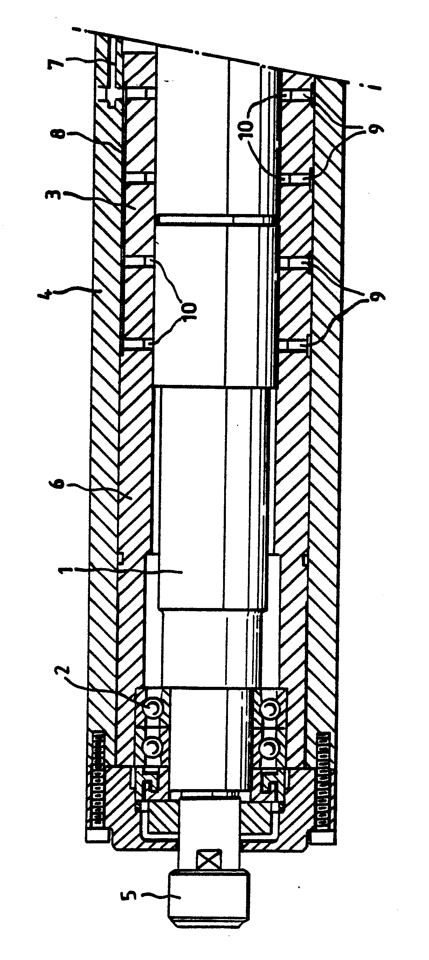

In order that the invention may be clearly understood and readily carried into effect, one example thereof will now be described with reference to the accompanying drawing which shows a longitudinal section of a bearing assembly for a shaft.

Referring to the particular example in the drawing, a shaft 1 is mounted in a tubular support 4 to drive a tool, such as a drill, routing cutter or mandrel carrying a small grinding wheel, mounted in a chuck 5. The shaft 1 may, for example, be driven by an electric motor or by a belt set up in a housing within a machine tool.

At its forward end the shaft 1 is supported by a pair of angular contact ball bearings 2 mounted in a sleeve 6 fixed in the tubular support 4. These bearings prevent any axial movement of the shaft 1 and in the support 2 under the working load during the operation of the tool.

A further bearing 3 is necessary to give support to the shaft 1 along its length and when the shaft is rotating at high speed, the heat generation within the bearing systems inevitably heats the shaft resulting in its axial growth. To eliminate resistance to this axial movement the bearing 3 is constructed as an air lubricated journal bearing wherein a portion of the sleeve 6 constitutes the journal. To provide for the lubrication compressed air is fed through a passage 7 in the tubular support 2 to an axial groove 8 formed on the outer surface of the sleeve 6 and communicating with circumferential grooves 9 on the outer surface. From these grooves the air passes through rows of radial passages 10 to the interface between the shaft 1 and sleeve 6. The air escapes through a circumferential groove 11 in the shaft 1 to an exhaust passage (not shown).

## Claims

1. A bearing assembly comprising a shaft (1), a support (4) for the shaft, a mechanical bearing unit (2) interposed between the shaft and the support, the mechanical bearing unit being fixed against axial movement at least in one axial direction with respect to both the shaft and the support, characterised in that a gas lubricated journal bearing (3) is interposed between the shaft and the support, the gas lubricated journal bearing being mounted in a position displaced from the mechanical bearing unit for the shaft to expand freely through the gas lubricated journal bearing when the shaft temperature rises.

2. A bearing assembly according to Claim 1, characterised in that the mechanical bearing unit is fixed against axial movement in both axial directions with respect to the shaft and the support.

3. A bearing assembly according to Claim 2, characterised in that the mechanical bearing unit comprises two angular contact rolling element bearings.